# EUROPÄISCHE PATENTANMELDUNG

(11) **EP 4 116 201 A1**
(43) Veröffentlichungstag der Anmeldung: **11.01.2023**
(21) Anmeldenummer: 22182556.5
(22) Anmeldetag: 01.07.2022
(51) Int. Cl.: B65B 1/04, B65B 9/04, B65B 65/00, B65B 59/04, A47B 57/00, F16M 5/00

(54) **VERPACKUNGSMASCHINE**

(30) Priorität: 05.07.2021 DE 102021117334; 22.10.2021 DE 102021127483
(71) Anmelder: Weber Maschinenbau GmbH Breidenbach, 35236 Breidenbach (DE)
(72) Erfinder: Gerhardt, Markus, 35216 Biedenkopf (DE); Stöwer, Andreas, 57392 Schmallenberg (DE); Knauf, Michael, 35287 Amöneburg-Mardorf (DE); Krüger, Jens, 35708 Haiger (DE); Schäfer, Marvin, 35216 Biedenkopf (DE)
(74) Vertreter: Manitz Finsterwald Patent- und Rechtsanwaltspartnerschaft mbB

(57) **Zusammenfassung**

Die Erfindung betrifft eine Verpackungsmaschine für Lebensmittelprodukte mit mehreren längs einer Transportrichtung hintereinander angeordneten Arbeitsstationen zum Herstellen von Packungen jeweils aus zumindest einem unteren Packungsbestandteil und zumindest einem oberen Packungsbestandteil, die wenigstens einen Produktbereich einer jeweiligen Packung einschließen, und mit einer Transporteinrichtung, mit der während des Betriebs die Packungsbestandteile in Transportrichtung durch die Arbeitsstationen hindurch transportiert werden, wobei eine Arbeitsstation eine Einbringstation zum Einlegen oder Auflegen von Produkten in bzw. auf einen oder die Packungsbestandteile ist, wobei die Einbringstation umfasst: ein sich im aufgestellten Betriebszustand am Boden abstützendes Traggestell, das eine Mehrzahl von miteinander verbundenen Tragelementen umfasst, zumindest eine von dem Traggestell getragene Handhabungseinrichtung, insbesondere einen Roboter, zum Einlegen oder Auflegen der Produkte in bzw. auf einen oder die Packungsbestandteile, und eine Mehrzahl von Rahmenelementen, die jeweils an zumindest einer Verbindungsstelle mit dem Traggestell verbunden sind und an denen zumindest eine Baugruppe der Verpackungsmaschine angebracht ist, so dass die Baugruppe nicht unmittelbar, sondern mittelbar über ein oder mehrere Rahmenelemente an dem Traggestell angebracht ist, wobei jede Verbindungsstelle von einem mechanischen Lager gebildet ist, das in einem gelösten Zustand eine Ausrichtbewegung relativ zu dem Traggestell erlaubt, und wobei die Lager jeweils ausgehend von dem gelösten Zustand in einen die Ausrichtbewegung unterbindenden fixierten Zustand überführbar sind, um die Rahmenelemente in einer Montage-Konfiguration zu fixieren, in der die Rahmenelemente in einer vorgegebenen Weise relativ zueinander ausgerichtet sind.

## Beschreibung

Die Erfindung betrifft eine Verpackungsmaschine für Lebensmittelprodukte, insbesondere einen Thermoformer oder einen Traysealer, mit mehreren längs einer Transportrichtung hintereinander angeordneten Arbeitsstationen zum Herstellen von Packungen jeweils aus zumindest einem unteren Packungsbestandteil, insbesondere einer Unterfolie oder einem vorgefertigten Packungsbestandteil, und zumindest einem oberen Packungsbestandteil, insbesondere einer Oberfolie, die wenigstens einen Produktbereich einer jeweiligen Packung einschließen, und mit einer Transporteinrichtung, mit der während des Betriebs die Packungsbestandteile in Transportrichtung durch die Arbeitsstationen hindurch transportiert werden, wobei eine Arbeitsstation eine Einbringstation zum Einlegen oder Auflegen von Produkten in einen Packungsbestandteil oder in die Packungsbestandteile bzw. auf einen Packungsbestandteil oder auf die Packungsbestandteile ist.

Derartige Verpackungsmaschinen sind grundsätzlich bekannt. Das Einlegen oder Auflegen der Produkte kann auf unterschiedliche Art und Weise erfolgen, d.h. es sind unterschiedliche Typen von Einbringstationen bekannt.

Bei einem bekannten Typ von Einbringstation werden eine oder mehrere Handhabungseinrichtungen eingesetzt, die insbesondere jeweils von einem Roboter gebildet werden, beispielsweise einem so genannten Pick-and-Place-Roboter, der auch einfach als Picker bezeichnet wird. Derartige Roboter benötigen eine stabile Basis. In der Praxis werden für derartige Roboter deshalb massive Traggestelle eingesetzt, die als Schweißkonstruktionen aus einer Mehrzahl von miteinander verschweißten Tragelementen hergestellt werden. Diese Schweißkonstruktionen werden auch als Roboterzellen bezeichnet, da sich der oder die Roboter im

Inneren des von den einzelnen Tragelementen gebildeten Traggestells befinden. In Abhängigkeit von der Anzahl der eingesetzten Roboter sind Einfach- oder Mehrfachzellen bekannt, beispielsweise Doppelzellen mit zwei in Transportrichtung hintereinander angeordneten Robotern, die von einem gemeinsamen Traggestell getragen sind.

Auch die Anordnung einer Roboterzelle an oder in einer Verpackungsmaschine bzw. die Integration einer Roboterzelle in eine Verpackungsmaschine kann auf unterschiedliche Art und Weise erfolgen. So ist es beispielsweise seit langem bekannt, eine als separate Maschine konzipierte Roboterzelle derart groß auszugestalten, dass die Verpackungsmaschine durch die Roboterzelle hindurchgeführt werden kann. Die Roboterzelle wird also gewissermaßen über die Verpackungsmaschine gestülpt. Dieses Konzept ist mit einer Reihe von Nachteilen verbunden. Insbesondere benötigt eine derartige Roboterzelle sehr viel Platz, d.h. die Verpackungsmaschine wird im Bereich der Roboterzelle beträchtlich verbreitert. Des Weiteren sind hierbei im Prinzip viele Elemente der Tragkonstruktion doppelt vorhanden.

Auch ist es bekannt, die Roboterzelle auf den Rahmen der Verpackungsmaschine zu setzen und so im Bereich des oder der Roboter ein gemeinsames Traggestell für Verpackungsmaschine und Roboter zu bilden. Ein derartiges Konzept ist beispielsweise aus DE 10 2017 122 703 A1 bekannt.

Ferner ist es bekannt, die Verpackungsmaschine in Transportrichtung zu teilen und die Roboterzelle zwischen einen stromaufwärtigen Teil der Verpackungsmaschine und einen stromabwärtigen Teil zu stellen. Ein solches Konzept hat grundsätzlich den Vorteil, dass die Verpackungsmaschine nicht unnötig verbreitert wird und kein übermäßiger Materialeinsatz notwendig ist. Allerdings sind an der Roboterzelle eingangsseitige und ausgangsseitige Anbindungen für die Teile der Verpackungsmaschine erforderlich, wobei außerdem dafür gesorgt werden muss, dass die Transporteinrichtung durch die Roboterzelle hindurchgeführt werden kann. In diesem Zusammenhang ist festzuhalten, dass die Transporteinrichtung einer Verpackungsmaschine eine durchgehende Einrichtung ist, die sich im Wesentlichen entlang der gesamten Verpackungsmaschine in Transportrichtung erstreckt und dabei die Packungsbestandteile durch die einzelnen Arbeitsstationen und somit auch durch die Roboterzelle hindurchbewegen muss, was bedeutet, dass es nicht damit getan wäre, zur Integration der Roboterzelle die Verpackungsmaschine samt Transporteinrichtung einfach durchzutrennen. Äußerst schwierig, wenn nicht praktisch unmöglich, wäre dies ohnehin bei solchen Verpackungsmaschinen, die auch als klassische Thermoformer bezeichnet werden und bei denen die Packungsbestandteile in Form von Vertiefungen durch Thermoformen in einer Folienbahn ausgebildet werden und somit im Bereich der Roboterzelle, wo das Einlegen der Produkte in die Vertiefungen erfolgt, noch zusammenhängen, da die Folienbahn mit den darin ausgebildeten Vertiefungen durch die Roboterzelle hindurchbewegt wird und eine Vereinzelung der Packungsbestandteile erst stromabwärts der Roboterzelle erfolgt.

Sowohl für die Anbindung der beiden Teile der Verpackungsmaschine an die Roboterzelle als auch für die Positionierung und Anbringung des durch die Roboterzelle hindurchzuführenden Abschnitts der Transporteinrichtung ist eine sehr hohe Genauigkeit erforderlich, die von der Roboterzelle bereitgestellt werden muss, damit die Funktionsweise der Verpackungsmaschine und insbesondere der Transporteinrichtung nicht beeinträchtigt wird.

Diese notwendige Positionsgenauigkeit liegt in der Praxis etwa bei einem Zehntel Millimeter. Die hier in Rede stehenden Schweißkonstruktionen für Roboterzellen können nur mit einer Genauigkeit von etwa einem Millimeter gefertigt werden. Insbesondere hinsichtlich der Gesamtlänge in Transportrichtung, der Winkelgenauigkeit der benötigten Anschlussflächen und der einzuhaltenden Höhen für die jeweils mit der Roboterzelle zu verbindenden Baugruppen sind diese Fertigungstoleranzen zu hoch. Daher wird die Roboterzelle im Anschluss an die Schweißarbeiten an denjenigen Stellen, an denen eine Anbindung erforderlich ist, zusätzlich bearbeitet, was in der Praxis meist durch Überfräsen erfolgt. Derartige Zusatzbearbeitungen - zudem an relativ großen Bauteilen - verursachen hohe Kosten und haben zumeist den weiteren Nachteil, dass sie extern als Auftragsarbeiten erfolgen müssen, was den Produktionsprozess verlangsamt und den Produktionsablauf stört.

Ein weiterer Nachteil der üblichen Schweißkonstruktionen ist, dass ohne aufwändige Zusatzmaßnahmen im Bereich der Roboterzelle keine Standardbaugruppen von Verpackungsmaschinen montiert werden können. Bei diesen Standardbaugruppen handelt es sich beispielsweise um Beladeformen, Rütteltische, Vakuumpumpenhalter, Produktunterstützungen, Einlegeschablonen, Schaltschränke, Stützbleche, Formplattenwechselhilfen, Schneide- und Stanzeinrichtungen, Rollenbahnen sowie verschiedene Kleinteile wie Seitenverkleidungsscharniere, Magnetschalter, Kabelkanäle etc. Dies liegt daran, dass für die Montage nicht diejenigen Standardelemente wie insbesondere Rahmenprofile verwendet werden können, wie sie standardmäßig bei einer Verpackungsmaschine verbaut werden.

Abgesehen davon, dass auch bei der Verwendung derartiger Standardelemente in einer Schweißkonstruktion die erforderliche Positionsgenauigkeit nicht gegeben wäre, scheidet die Verwendung auch bereits dann aus, wenn zusätzliche Stabilitätsanforderungen bestehen, was in der Praxis insbesondere dann wichtig ist, wenn die Roboterzelle zusätzlich eine Produktzufuhr beispielsweise in Form eines sogenannten Eintragbandes abstützen muss. Die Produktzufuhr soll möglichst nahe an die Transporteinrichtung der Verpackungsmaschine heranreichen, damit ein jeweiliger Roboter bzw. dessen Greifer möglichst kurze Arbeitswege hat, wenn er Produkte von der Produktzufuhr abnimmt und den Packungsbestandteilen zuführt. Daher ist es in der Praxis üblich, die Produktzufuhr nicht als separate Maschine neben die Roboterzelle zu stellen. Stattdessen erfolgt eine direkte Anbindung der Produktzufuhr an die Roboterzelle, nämlich mittels einer Mehrzahl von am Traggestell befestigten, seitlich auskragenden und sich senkrecht zur Transportrichtung erstreckenden Tragarmen. Auf diese Tragarme kann die Produktzufuhr zum Beispiel aufgesteckt werden. Hierfür ist ersichtlich eine besonders hohe Stabilität auch desjenigen Elementes des Traggestells erforderlich, an dem die erwähnten Tragarme befestigt werden. Die erforderliche Stabilität kann von Standardprofilen einer Verpackungsmaschine nicht bereitgestellt werden. In der Praxis sind deshalb auf der für die Anbindung der Produktzufuhr vorgesehenen Seite in die die Roboterzelle bildende Schweißkonstruktion spezielle Träger beispielsweise in Form von Flachstählen integriert, die mit den übrigen Tragelementen der Schweißkonstruktion verschweißt und derart ausgebildet sind, dass sie die auskragenden Tragarme und die daran abgestützte Produktzufuhr halten können.

Aufgrund dieser speziellen Träger fehlen der Roboterzelle die standardisierten Anbringungsmerkmale, wie beispielsweise Lochreihen, die an den üblichen Rahmenelementen der Verpackungsmaschine ausgebildet sind. Dies ist der Grund dafür, dass eine einfache, standardmäßige Anbringung der üblichen Baugruppen von Verpackungsmaschinen an der Roboterzelle nicht möglich ist, die folglich modifiziert werden muss. In der Praxis werden daher nur die für die jeweilige Konfiguration unbedingt benötigten Anbindungen, beispielsweise Bohrungen, hergestellt, um Aufwand und Kosten möglichst gering zu halten. Gleichwohl entstehen hohe Zusatzkosten, und die Herstellung nur der unbedingt notwendigen Anbindungen verringert erheblich die Flexibilität im Vergleich zu den vielfältigen Anbringungsmöglichkeiten, wie sie die Verwendung herkömmlicher Standardelemente von Verpackungsmaschinen bietet.

Aufgabe der Erfindung ist es daher, die Integration einer Einbringstation in eine Verpackungsmaschine der eingangs genannten Art ohne die vorstehend erwähnten Nachteile zu ermöglichen.

Die Lösung dieser Aufgabe erfolgt durch die Merkmale des Anspruchs 1. Erfindungsgemäß ist vorgesehen, dass die Einbringstation umfasst: ein sich im aufgestellten Betriebszustand am Boden abstützendes Traggestell, das eine Mehrzahl von miteinander verbundenen Tragelementen umfasst, zumindest eine von dem Traggestell getragene Handhabungseinrichtung, insbesondere einen Roboter zum Einlegen oder Auflegen der Produkte in bzw. auf einen oder die Packungsbestandteile, und eine Mehrzahl von Rahmenelementen, die jeweils an zumindest einer Verbindungsstelle mit dem Traggestell verbunden sind und an denen zumindest eine Baugruppe der Verpackungsmaschine angebracht ist, so dass die Baugruppe nicht unmittelbar, sondern mittelbar über ein oder mehrere Rahmenelemente an dem Traggestell angebracht ist, wobei jede Verbindungsstelle von einem mechanischen Lager gebildet ist, das in einem gelösten Zustand eine Ausrichtbewegung relativ zu dem Traggestell erlaubt, und wobei die Lager jeweils ausgehend von dem gelösten Zustand in einen die Ausrichtbewegung unterbindenden fixierten Zustand überführbar sind, um die Rahmenelemente in einer Montage-Konfiguration zu fixieren, in der die Rahmenelemente in einer, insbesondere durch die jeweils anzubringende Baugruppe, vorgegebenen Weise relativ zueinander ausgerichtet sind.

Die Rahmenelemente sind folglich nur mittelbar am Traggestell angebracht, und zwar über die mechanischen Lager, die relativ zu dem Traggestell ausgerichtet werden können, um so die erforderliche Positionsgenauigkeit ohne aufwändige Nachbearbeitung des Traggestells herzustellen.

Die Erfindung beruht unter anderem auf der Erkenntnis, dass übliche Traggestelle in der Regel stabiler als notwendig sind und folglich die Integration der über die Lager verbundenen Rahmenelemente keine relevante Schwächung darstellt, wobei auch die Rahmenelemente bei fixierten Lagern zur Gesamtstabilität des Traggestells beitragen. Feste Verbindungsstellen werden erfindungsgemäß durch einstellbare und fixierbare Verbindungsstellen - nämlich die mechanischen Lager - ersetzt. Anders als zum Beispiel in gewissen Grenzen verformbare Verbindungselemente wie beispielsweise Gummipuffer o.Ä., welche keine ausreichende Gesamtstabilität des Traggestells gewährleisten könnten, sind erfindungsgemäß die mechanischen Lager nach dem Ausrichten fixierbar und bieten somit ausreichend mechanische Stabilität.

Die Rahmenelemente bilden gemeinsam einen - in das Traggestell integrierten - Rahmen, an welchem die jeweiligen Standardbaugruppen der Verpackungsmaschine in der üblichen Weise montiert werden können. Folglich können nicht nur die üblichen, mit den normalen Anbringungsmerkmalen (z.B. Lochreihen etc.) versehenen Rahmenelemente der Verpackungsmaschine verwendet werden, sondern diese Rahmenelemente können auch mit aufgrund der mechanischen Lager relativ geringem Aufwand korrekt relativ zueinander und relativ zu den vor und hinter der Einbringstation befindlichen Teilen der Verpackungsmaschine ausgerichtet werden.

Mit anderen Worten stellt die erfindungsgemäße Einbringstation mit den exakt ausgerichteten Rahmenelementen keinen "Bruch" innerhalb der Verpackungsmaschine dar, was - wie erwähnt - insbesondere für die durchgehende Transporteinrichtung wichtig ist.

Auf eine bestimmte Orientierung dieses in das Traggestell integrierten, von den Rahmenelementen gewissermaßen gebildeten Innen-Rahmens relativ zum Traggestell kommt es dagegen nicht an, da eventuelle Fehlausrichtungen vergleichsweise klein sind und durch die Handhabungseinrichtung problemlos ausgeglichen werden können, beispielsweise durch Teaching eines die Handhabungseinrichtung bildenden Roboters.

Eine korrekte Ausrichtung der Lager relativ zueinander und zur Verpackungsmaschine, deren Bestandteil das Traggestell später sein soll, kann beispielsweise durch Verwendung geeigneter Hilfsmittel (z.B. Schablonen, Adapterelemente etc.) erfolgen, die während des Montageprozesses vor Anbringung der eigentlichen Rahmenelemente als Referenz dienen und gewissermaßen die Verpackungsmaschine "simulieren", welche folglich bei der Montage der erfindungsgemäßen Einbringstation nicht benötigt wird. Das eigentliche Montageverfahren zur Ausrichtung der Lager ist selbst nicht separat beanspruchter Gegenstand der Erfindung, so dass hierauf nicht näher eingegangen werden soll.

Die Ausrichtbarkeit der Lager und damit letztlich der Rahmenelemente relativ zum Traggestell erlaubt es, auf kostenintensive und zeitaufwändige Bearbeitungen wie beispielsweise das erwähnte Überfräsen des Traggestells verzichten zu können, da durch die Verwendung der Lager eine Ausrichtmöglichkeit für solche Bauteile, nämlich die Rahmenelemente, geschaffen wird, die eine präzise Ausrichtung relativ zueinander und relativ zu den sich vor und hinter dem Traggestell befindlichen Abschnitten der Verpackungsmaschine erfordern.

Dieses Konzept macht somit Zusatzschritte und externe Auftragsarbeiten überflüssig und reduziert somit Kosten und Aufwand bei der Montage der die Einbringstation mit dem Traggestell umfassenden Verpackungsmaschine.

Weitere Ausführungsformen der Erfindung sind in den abhängigen Ansprüchen, der nachfolgenden Beschreibung sowie der Zeichnung angegeben.

Gemäß einigen Ausführungsbeispielen kann vorgesehen sein, dass die Rahmenelemente einen Transportdurchgang für die sich während des Betriebs durch die Einbringstation hindurchbewegende Transporteinrichtung definieren.

Die Rahmenelemente können jeweils ein Seitenteil der Verpackungsmaschine bilden.

Vorzugsweise weisen die Rahmenelemente jeweils eine langgestreckte Form auf.

Die Rahmenelemente können als Profile ausgebildet sein, insbesondere als einfach oder mehrfach abgewinkelte Profile.

Die Rahmenelemente können sich jeweils in Transportrichtung erstrecken.

Des Weiteren kann bei einigen Ausführungsbeispielen vorgesehen sein, dass zumindest ein innerhalb des Traggestells befindliches Rahmenelement mit zumindest einem in Transportrichtung vor oder hinter dem Traggestell befindlichen Rahmenelement der Verpackungsmaschine fluchtet. Dies ist insbesondere dann von Vorteil, wenn die fluchtenden Rahmenelemente zur Anbringung einer durch die Einbringstation hindurchverlaufenen Führungseinrichtung für die Transporteinrichtung der Verpackungsmaschine dienen, insbesondere einer Führungseinrichtung für umlaufende Transportketten der Transporteinrichtung.

Des Weiteren kann vorgesehen sein, dass die Rahmenelemente sich jeweils in einem Bereich zwischen zwei vertikal verlaufenden, in Transportrichtung voneinander beabstandeten Tragelementen des Traggestells erstrecken.

Ferner kann gemäß einigen Weiterbildungen der Erfindung vorgesehen sein, dass zumindest ein Paar von Rahmenelementen vorgesehen ist, die in der gleichen Vertikalposition parallel zueinander in Transportrichtung und quer zur Transportrichtung mit Abstand voneinander verlaufen.

Es können zumindest zwei derartige Paare von Rahmenelementen vorgesehen sein, die in unterschiedlichen Vertikalpositionen gelegen sind. Obere Rahmenelemente können, wie vorstehend bereits erwähnt, insbesondere zur Anbringung von Führungseinrichtungen für die Transporteinrichtung, insbesondere von umlaufenden Transportketten, der Verpackungsmaschine dienen, wohingegen untere Rahmenelemente dazu dienen können, andere Baugruppen der Verpackungsmaschine anzubringen. In Abhängigkeit von der jeweiligen konkreten Ausgestaltung der Baugruppen können diese entweder nur an den unteren Rahmenelementen oder sowohl an den oberen als auch den unteren Rahmenelementen befestigt sein.

Außerdem wird die Stabilität des Traggestells durch in unterschiedlichen Vertikalpositionen vorgesehene Rahmenelemente weiter erhöht.

Des Weiteren kann gemäß einigen Ausführungsbeispielen vorgesehen sein, dass die Rahmenelemente jeweils mit zumindest einem mechanischen Anbringungsmerkmal versehen sind, insbesondere mit zumindest einer Lochreihe. Das Anbringungsmerkmal kann insbesondere einem solchen entsprechen, das an entsprechenden Elementen der vor und/oder hinter der Einbringstation angeordneten Teile der Verpackungsmaschine ausgebildet ist, und insbesondere eine Fortsetzung dieses Anbringungsmerkmals bilden bzw. selbst von diesem Anbringungsmerkmal fortgesetzt werden.

Wie bereits erwähnt, kann es sich bei einer jeweiligen Baugruppe, die an den Rahmenelementen angebracht ist, um eine Führungseinrichtung für die Transporteinrichtung der Verpackungsmaschine handeln, wobei es sich auch um eine andere Baugruppe handeln kann.

Die Baugruppe kann zwischen einer Eingangsseite des Traggestells, an der die Transporteinrichtung in das Traggestell eintritt, und einer Ausgangsseite des Traggestells angeordnet sein, an der die Transporteinrichtung aus dem Traggestell austritt.

Es ist aber auch möglich, dass eine jeweilige Baugruppe in Transportrichtung vor oder hinter dem Traggestell angeordnet ist.

Wie bereits erwähnt, kann bei einigen Weiterbildungen der Erfindung vorgesehen sein, dass die Baugruppe eine Führungseinrichtung für die Transporteinrichtung der Verpackungsmaschine ist, insbesondere für zwei quer zur Transportrichtung voneinander beabstandete Transportketten jeweils zum seitlichen Halten eines bahnförmigen Packungsbestandteils, insbesondere einer Unterfolie.

Die konkrete Ausgestaltung eines jeweiligen Lagers definiert die Anzahl der Freiheitsgrade für die jeweilige Ausrichtbewegung. In Abhängigkeit von den jeweiligen Anforderungen kann somit durch die konkrete Auswahl der Lager festgelegt werden, welche Ausrichtbewegungen möglich sind.

Zum Fixieren und Lösen eines jeweiligen Lagers können eine oder mehrere Schraubverbindungen vorgesehen sein.

Vorzugsweise ist vorgesehen, dass ein jeweiliges Lager eine Kombination aus zumindest einem Drehlager und wenigstens einem Linearlager ist.

Gemäß einigen bevorzugten Ausgestaltungen der Erfindung erlaubt ein jeweiliges Lager eine Ausrichtbewegung mit sechs Freiheitsgraden. Bei diesen sechs Freiheitsgraden handelt es sich um drei Rotationen um drei jeweils paarweise senkrecht aufeinander stehende Achsen und um drei Translationen entlang oder parallel zu diesen Achsen.

Gemäß einigen bevorzugten Ausgestaltungen der Erfindung umfasst ein jeweiliges Lager zwei Lagerteile, bevorzugt zumindest bereichsweise C-förmige, ineinandergreifende Lagerteile, von denen das eine mit einem jeweiligen Rahmenelement und das andere mit dem Traggestell verbunden ist. Dabei kann insbesondere vorgesehen sein, dass zwischen den beiden Lagerteilen eine erste Rotation um eine, insbesondere vertikal verlaufende, erste Drehachse möglich ist, wobei insbesondere die Rotation um die erste Drehachse durch eine lösbare und fixierbare Schraubverbindung zwischen den beiden Lagerteilen ermöglicht ist.

Des Weiteren kann gemäß einigen Ausführungsbeispielen vorgesehen sein, dass zwischen dem einen Lagerteil und einem jeweiligen Rahmenelement und zwischen dem anderen Lagerteil und dem Traggestell jeweils eine Rotation um eine zweite bzw. um eine dritte Drehachse sowie zumindest eine Translation senkrecht zur zweiten bzw. dritten Drehachse möglich ist. Dabei können die zweite Drehachse und die dritte Drehachse senkrecht zueinander und jeweils horizontal verlaufen.

Des Weiteren kann gemäß einigen Ausführungsformen der Erfindung vorgesehen sein, dass jeweils die Rotation und die zumindest eine Translation durch zwei Stift-/Langloch-Anordnungen, insbesondere zwei lösbare und fixierbare Schraubverbindungen, ermöglicht sind, die insbesondere zwei parallel zur jeweiligen Drehachse und jeweils durch zumindest ein sich senkrecht zur jeweiligen Drehachse erstreckendes Langloch hindurch verlaufende Verbindungsstifte, bevorzugt Schrauben, umfassen. Dabei ist bevorzugt vorgesehen, dass jeweils der Stiftdurchmesser kleiner als die Langlochbreite ist.

Es ist erfindungsgemäß nicht zwingend, dass jede Verbindungsstelle ein einziges mechanisches Lager aufweist. Es kann vorgesehen sein, dass zumindest für eine Verbindungsstelle zusätzlich zumindest ein, vorzugsweise als Lasche ausgebildetes, weiteres Befestigungselement vorgesehen ist, über welches das jeweilige Rahmenelement mit dem Traggestell verbunden ist.

Dabei kann auch das weitere Befestigungselement als ein mechanisches Lager ausgebildet sein, das in einem gelösten Zustand eine Ausrichtbewegung relativ zu dem Traggestell erlaubt und jeweils ausgehend von dem gelösten Zustand in einen die Ausrichtbewegung unterbindenden fixierten Zustand überführbar ist, um das jeweilige Rahmenelement in der Montage-Konfiguration zu fixieren.

Unabhängig davon, ob das zusätzliche Befestigungselement ebenfalls als ein solches mechanisches Lager ausgebildet ist oder nicht, erhöht dieses Befestigungselement die Stabilität der Gesamtkonstruktion, da an der betreffenden Verbindungsstelle eine zusätzliche Befestigung für das Rahmenelement an dem Traggestell geschaffen wird. Das Befestigungselement kann derart ausgestaltet sein, dass es die Befestigung des Rahmenelements in unterschiedlichen Ausrichtungen, die das Lager dieser Verbindungsstelle ermöglicht, gestattet. Wenn auch das Befestigungselement als ein mechanisches Lager ausgebildet ist, das im gelösten Zustand eine Ausrichtbewegung erlaubt, dann kann hierdurch die Ausrichtung und die anschließende Fixierung der Rahmenelemente in der Montage-Konfiguration weiter vereinfacht und verbessert werden.

Gemäß einigen Ausführungsbeispielen der Erfindung ist das Traggestell eine Schweißkonstruktion.

Die Lager können jeweils traggestellseitig mit einem vertikal verlaufenden Tragelement, insbesondere mit einer Tragsäule, verbunden sein. Dabei kann insbesondere vorgesehen sein, dass das vertikal verlaufende Tragelement in Höhe des Lagers eine Verbreiterung in Transportrichtung aufweist.

Wie an anderer Stelle bereits erwähnt, kann gemäß einigen Ausführungsbeispielen der Erfindung vorgesehen sein, dass die Transporteinrichtung zwei quer zur Transportrichtung voneinander beabstandete Transportketten jeweils zum seitlichen Halten eines bahnförmigen Packungsbestandteils, insbesondere einer Unterfolie, umfasst.

Die Handhabungseinrichtung kann als ein Pick-and-Place-Roboter ausgebildet sein.

Das Traggestell kann so ausgebildet sein, dass es lediglich eine Handhabungseinrichtung aufweist. Alternativ können zwei oder mehr als zwei Handhabungseinrichtungen in Transportrichtung nebeneinander und/oder hintereinander am Traggestell vorgesehen sein. Vorzugsweise sind an dem Traggestell zwei in Transportrichtung aufeinanderfolgende Roboter vorgesehen. Ein solches Traggestell bzw. die dieses Traggestell umfassende Einbringstation wird auch als Doppelzelle bezeichnet.

Gemäß einigen Ausführungsbeispielen kann vorgesehen sein, dass die Einbringstation eine Anbindung für eine Produktzufuhr, insbesondere ein Eintragband, umfasst, wobei ein Arbeitsbereich der von dem Traggestell getragenen Handhabungseinrichtung einen Einbringbereich zum Einlegen oder Auflegen der Produkte in bzw. auf einen oder die Packungsbestandteile und einen seitlich neben dem Einbringbereich gelegenen, von der Produktzufuhr bereitgestellten Abnahmebereich für mittels der Produktzufuhr zugeführte und von der Verpackungsmaschine zu verpackende Produkte abdeckt, und wobei die Anbindung für die Produktzufuhr ausschließlich am Traggestell abgestützt oder ausschließlich vom Traggestell gebildet ist.

Die Rahmenelemente werden folglich nicht für die Anbindung der Produktzufuhr benötigt. Vielmehr ist es ausschließlich das Traggestell, welches die Produktzufuhr mittels der Anbindung abstützt bzw. welches die Anbindung zur Abstützung der Produktzufuhr bildet.

Der Einbringbereich befindet sich also innerhalb des Traggestells, wohingegen der Abnahmebereich sich außerhalb des Traggestells, also seitlich neben dem Traggestell, befindet.

Wenn eine oder mehrere Verbreiterungen, wie vorstehend erwähnt, vorgesehen sind, dann kann hieran die Abstützung der Anbindung der Produktzufuhr erfolgen bzw. kann die eine Verbreiterung oder können die mehreren Verbreiterungen die Anbindung der Produktzufuhr bilden.

Gemäß einigen Ausführungsbeispielen kann vorgesehen sein, dass die Anbindung eine Mehrzahl von am Traggestell befestigten, seitlich auskragenden und sich senkrecht zur Transportrichtung erstreckenden Tragarmen umfasst, an denen die Produktzufuhr abgestützt ist. Insbesondere ist die Produktzufuhr auf die Tragarme aufsteckbar, wobei dieses Aufstecken vorzugsweise mittels Trägern eines die Produktzufuhr bildenden Eintragbandes erfolgt.

Die Erfindung wird im Folgenden beispielhaft unter Bezugnahme auf die Zeichnung beschrieben. Es zeigen:
- Fig. 1: schematisch in einer Seitenansicht eine Verpackungsmaschine gemäß dem Stand der Technik mit einer nicht gemäß der Erfindung ausgebildeten Einbringstation, wobei eine solche bekannte Verpackungsmaschine jedoch stattdessen mit einer erfindungsgemäßen Einbringstation versehen sein und somit eine erfindungsgemäße Verpackungsmaschine bilden kann,
- Fig. 2: eine als Doppel-Roboterzelle ausgebildete Einbringstation gemäß dem Stand der Technik, und
- Fig. 3 bis 12: verschiedene Ansichten einer erfindungsgemäßen, als Doppel-Roboterzelle ausgebildeten Einbringstation.

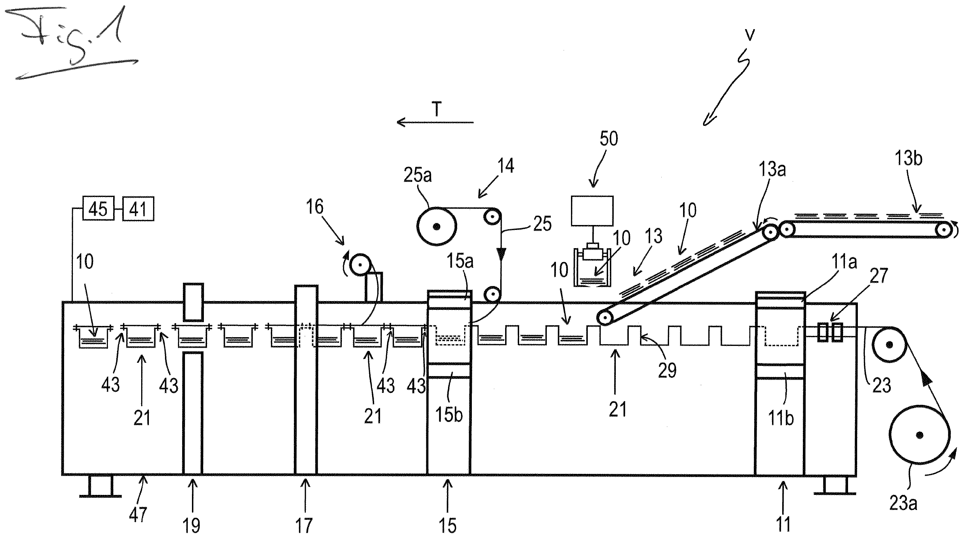

Die in Fig. 1 dargestellte, in einer Transportrichtung T arbeitende Verpackungsmaschine V umfasst ein Maschinengestell 47. An einem linken Seitenrahmen und an einem rechten Seitenrahmen des Maschinengestells 47 ist jeweils eine hier nur schematisch am stromaufwärts gelegenen Ende der Maschine dargestellte Transportkette 27 geführt. Die beiden Transportketten 27 bilden gemeinsam eine Transporteinrichtung für eine von einer Vorratsrolle 23a abgezogene Unterfolie 23.

Die Maschine umfasst eine Mehrzahl von in Transportrichtung T aufeinander folgenden Arbeitsstationen, nämlich eine auch als Tiefzieher oder Thermoformer bezeichnete Formstation 11, eine Einbringstation 13 für zu verpackende Produkte 10, eine Zufuhrstation 14 für eine von einer Vorratsrolle 25a abgezogene Oberfolie 25, eine Etikettier- und/oder Druckstation 16, eine Quertrennstation 17 sowie eine Längstrennstation 19.

Bei den zu verpackenden Produkten 10 handelt es sich beispielsweise um Lebensmittelprodukte, hier in Form von sogenannten Portionen, die jeweils mehrere Scheiben umfassen, welche zuvor mittels eines Lebensmittelslicers (nicht dargestellt) von einem laib- oder riegelförmigen Lebensmittel wie z.B. Wurst, Käse, Schinken oder Fleisch abgetrennt wurden. Der Slicer und die Verpackungsmaschine können eine durchgehende Produktionslinie bilden oder zentrale Bestandteile einer derartigen Produktionslinie sein.

Den Betrieb der Verpackungsmaschine V einschließlich der erwähnten Arbeitsstationen steuert eine zentrale Steuereinrichtung 41. Diese kann auch den Slicer steuern oder mit einer Steuereinrichtung des Slicers verbunden sein. Zudem ist die Verpackungsmaschine V bevorzugt mit einer Bedieneinrichtung 45 versehen, die z.B. einen Touchscreen umfasst, an welchem einem Bediener alle erforderlichen Informationen angezeigt werden können und der Bediener alle notwendigen Einstellungen vor und während des Betriebs der Maschine vornehmen kann. Aufbau und Funktionsweise der genannten Arbeitsstationen sind dem Fachmann grundsätzlich bekannt, sodass hierauf nicht im Detail eingegangen wird.

An der ein Oberwerkzeug 11a und ein Unterwerkzeug 11b umfassenden Formstation 11 werden jeweils in einem Tiefziehprozess in der Unterfolie 23 auch als Mulden bezeichnete Vertiefungen 29 ausgebildet. In diese Vertiefungen 29 werden an der Einbringstation 13 die erwähnten Portionen 10 eingelegt. Die Einbringstation 13 umfasst hier einen sogenannten Einleger, von dem zwei Endlosförderbänder 13a, 13b dargestellt sind. Alternativ oder zusätzlich kann die Einbringstation 13 einen hier ebenfalls schematisch dargestellten Roboter 50 umfassen, z.B. in Form eines sogenannten "Picker", der als Delta-Roboter mit einem Greifer, der zwei jeweils eine Portion 10 gemeinsam haltende Schaufeln umfasst, ausgebildet sein kann. Derartige Roboter und deren Einsatz bei der Handhabung von Lebensmitteln, insbesondere beim Einlegen von Portionen in Vertiefungen von Verpackungen, sind dem Fachmann grundsätzlich bekannt, weshalb hier weitergehende Ausführungen nicht erforderlich sind.

Anschließend werden die mit den gefüllten Vertiefungen 29 versehene Unterfolie 23 und die Oberfolie 25 der Siegelstation 15 zugeführt, die ein Oberwerkzeug 15a und ein Unterwerkzeug 15b umfasst. Mittels dieser Werkzeuge 15a, 15b werden die Oberfolie 25 und die Unterfolie 23 miteinander verbunden. Hierdurch werden die Vertiefungen 29 und somit die von Oberfolie 25 und Unterfolie 23 gebildeten Verpackungen 21 verschlossen. In Fig. 1 sind quer zur Transportrichtung T verlaufende, auch als Siegelnähte bezeichnete Siegelstellen 43 schematisch angedeutet.

Im Anschluss an die Siegelstation 15 hängen die Verpackungen 21 noch durch die Oberfolie 25 und die Unterfolie 23 zusammen, müssen also noch vereinzelt werden. In dem hier dargestellten Ausführungsbeispiel werden die Verpackungen 21 vor dem Vereinzeln an der Etikettier- und/oder Druckstation 16 mit Etiketten versehen und/oder bedruckt. Das Etikettieren und das Bedrucken kann auch in separaten Stationen erfolgen.

Stromabwärts der Trennstationen 17, 19 können weitere Förderbänder und/oder Arbeitsstationen vorgesehen sein, beispielsweise eine Waage zur Gewichtskontrolle der Verpackungen 21.

Anwendungen können sich z.B. hinsichtlich der Art der zu verpackenden Produkte 10, der Größe/Form der Vertiefungen 29 in Längs- und/oder Querrichtung oder hinsichtlich eines Formatsatzes voneinander unterscheiden. Ein Formatsatz bezeichnet hier allgemein eine Gruppe von Items, hier insbesondere sowohl von Portionen 10 als auch Vertiefungen 29 oder Verpackungen 21, die als Ganzes - also formatsatzweise - gehandhabt werden und sich insbesondere durch Anzahl und Abstand von Items in Längs- und Querrichtung voneinander unterscheiden.

So kann z.B. pro Arbeitstakt der Verpackungsmaschine ein Verpackungsformat oder Formatsatz von 3 x 4 (3 in Querrichtung und 4 in Längsrichtung) Vertiefungen 29 oder andersartigen Produktaufnahmen in der Formstation 11 gebildet werden, an der Einbringstation 13 ein Formatsatz von 3 × 4 entsprechend angeordneten Produkten 10 in einen jeweiligen Formatsatz von Vertiefungen 21 eingebracht werden, und an der Siegelstation 15 ein jeweiliger Formatsatz von 3 x 4 mit Produkten 10 gefüllten Vertiefungen 29 verschlossen werden. Analoges gilt für die Etikettier- und/oder Druckstation 16.

Grundsätzlich kann ein beliebig dimensionierter N x M Formatsatz gebildet werden, mit N >= 2 und M >= 1.

Der Betrieb der Verpackungsmaschine hinsichtlich Erfassung, Analyse und Beseitigung bzw. Reduzierung von Verpackungsfehlern kann anhand von Daten oder Messergebnissen von Messeinrichtungen (nicht gezeigt) überwacht und bei Bedarf angepasst werden. Die Messergebnisse werden zu diesem Zweck der Steuereinrichtung 41 zugeführt.

Beispielsweise kann eine Vermessung der im Entstehen befindlichen Verpackungen 21 unmittelbar im Anschluss an jede der Arbeitsstationen vorgesehen sein. Dieses Konzept kann auch nur mit einer Auswahl von Arbeitsstationen durchgeführt werden, d.h. es ist bei diesem Konzept nicht zwingend, dass eine Vermessung der Verpackungen 21 nach jeder Arbeitsstation erfolgt. Es kann auch lediglich eine Schlusskontrolle nach dem Vereinzeln der Verpackungen 21 erfolgen.

Nach Analyse der Messergebnisse kann - bevorzugt automatisch - in den Betrieb einer oder mehrerer Arbeitsstationen eingegriffen werden, um dem Entstehen von Befüllungs- und/oder Verpackungsfehlern entgegenzuwirken. Gemäß einem alternativen Konzept kann die Steuereinrichtung 41, beispielsweise an der Bedieneinrichtung 45, Informationen darstellen, anhand welcher ein Bediener selbst in den Betrieb einer oder mehrerer jeweiliger Arbeitsstationen eingreifen kann.

Der Eingriff in den Betrieb einer Arbeitsstation, d.h. die Regelung des Betriebs einer Arbeitsstation, kann insbesondere eine Veränderung der Position der Arbeitsstation bzw. eines Arbeitswerkzeuges der Arbeitsstation beinhalten, beispielsweise eine Positionsänderung in Transportrichtung T.

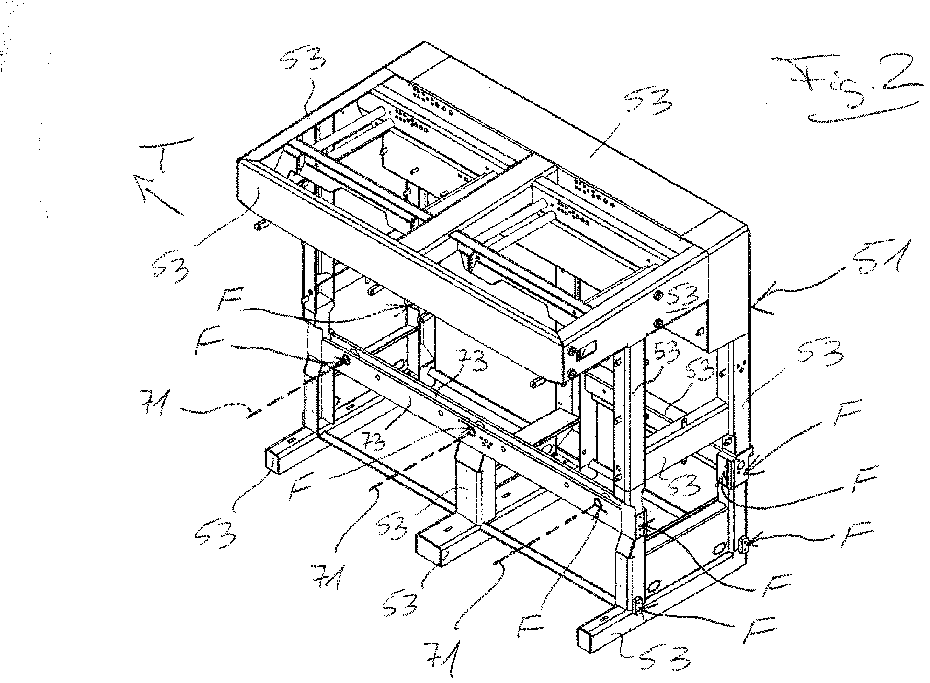

Wie erwähnt, kann diese bekannte Verpackungsmaschine mit einer anderen Einbringstation ausgestattet werden, nämlich mit einer ein Traggestell umfassenden Roboterzelle, die eingangsseitig und ausgangsseitig mit einem Rahmen oder Gestell eines entsprechenden Teils der Verpackungsmaschine verbunden ist. Eine aus dem Stand der Technik bekannte Roboterzelle zeigt Fig. 2, wobei anhand der weiteren Figuren dann eine erfindungsgemäße Einbringstation am Beispiel einer Doppel-Roboterzelle beschrieben wird.

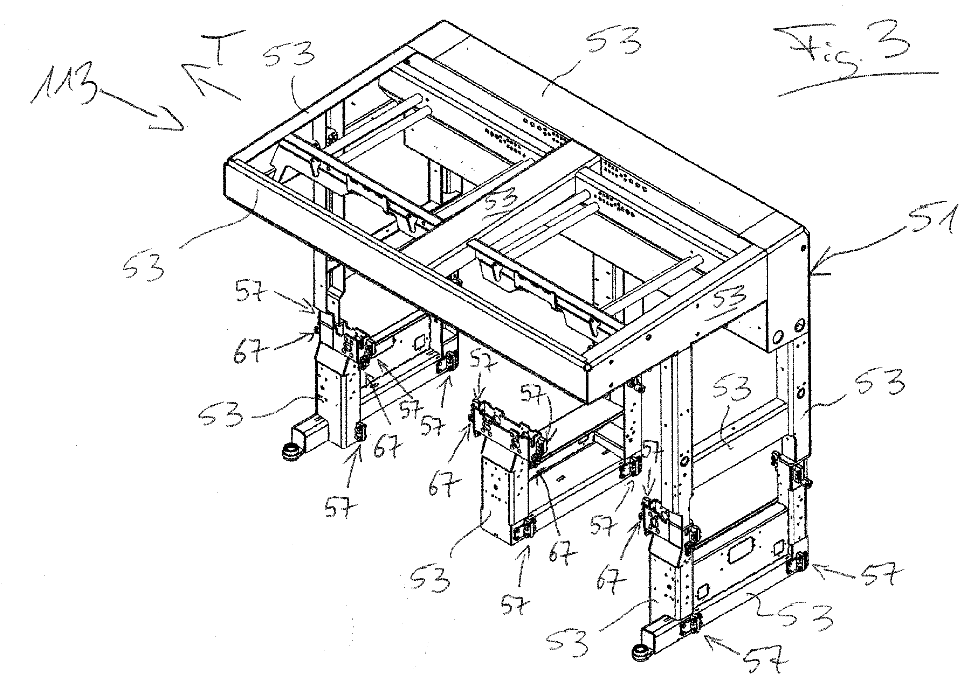

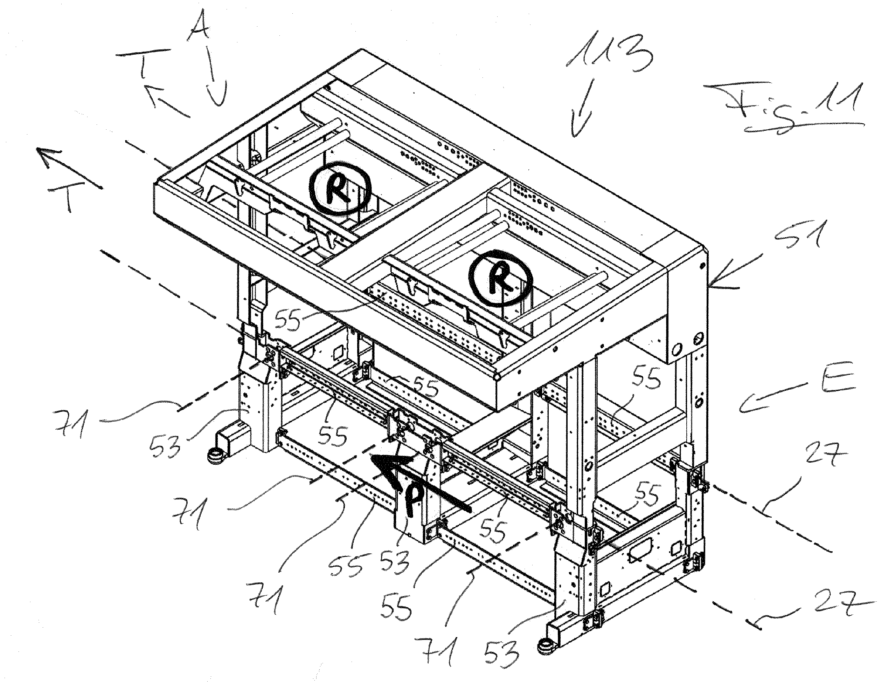

Die aus dem Stand der Technik bekannte Einbringstation gemäß Fig. 2 unterscheidet sich von der erfindungsgemäßen Einbringstation (vgl. z.B. die Darstellungen der Fig. 3 und Fig. 11) dadurch, dass in Transportrichtung T erstreckende Elemente, nämlich in Transportrichtung auf der rechten Seite befindliche Tragelemente 53 und auf der linken Seite befindliche Träger 73, die hier in Form zweier paralleler Flachstähle vorgesehen sind, integrale Bestandteile des als Schweißkonstruktion ausgebildeten Traggestells 51 sind, das zudem eine Vielzahl weiterer miteinander verschweißter Tragelemente 53 umfasst, die sich in Transportrichtung T, quer dazu sowie vertikal erstrecken.

Somit sind auch die erwähnten, sich in Transportrichtung T erstreckenden Elemente 53 und die Flachstähle 73 mit vertikalen Tragelementen 53 verschweißt. Hierdurch ergibt sich das im Einleitungsteil ausführlich erläuterte Erfordernis, diese Schweißkonstruktion an in Fig. 2 mit dem Bezugszeichen "F" bezeichneten Stellen durch Überfräsen zu bearbeiten, um präzise, mit der erforderlichen Genauigkeit von etwa einem Zehntel Millimeter bearbeitete Schnittstellen zur Anbindung von Bauteilen der hier nicht dargestellten Teile der Verpackungsmaschine bereitzustellen, zwischen denen sich das Traggestell 51 im vollständig montierten Zustand der Verpackungsmaschine befindet.

Die erfindungsgemäße Einbringstation 113 unterscheidet sich von derjenigen der Fig. 2 dadurch, dass die im mittleren und unteren Bereich in Transportrichtung T verlaufenden, mit den anderen Tragelementen 53 des Traggestells verschweißten Elemente weggelassen und stattdessen Rahmenelemente 55 (vgl. insbesondere Fig. 11) vorgesehen sind, die mit den Tragelementen 53 des Traggestells 51 nicht verschweißt, sondern über mechanische Lager 57 und zum Teil weitere Befestigungselemente 67 verbunden sind. In dem hier beschriebenen Ausführungsbeispiel sind auch diese weiteren Befestigungselemente 67 mechanische Lager, so dass im Folgenden für sowohl die Lager 57 als auch die Befestigungselemente 67 der Begriff "Lager" verwendet wird, um die Erläuterung zu vereinfachen.

Diese Lager, die von einem gelösten Zustand in einen fixierten Zustand überführt werden können, können im gelösten Zustand relativ zu den Tragelementen 53 derart verstellt werden, dass nach der im Anschluss an das Einstellen erfolgenden Fixierung der Lager und Befestigung der Rahmenelemente 55 an den fixierten Lagern die Rahmenelemente 55 in einer gewünschten, durch das Einstellen der Lager erreichten Ausrichtung an den Tragelementen 53 befestigt sind.

Wie eingangs erwähnt, erfolgt das Verstellen der Lager bei noch nicht angebrachten Rahmenelementen 55 (vgl. Fig. 3) mit Hilfe von nicht dargestellten Einstellhilfen (z.B. Schablonen, Adapterelemente etc.), die insbesondere die Verpackungsmaschine gewissermaßen simulieren, wobei nach dem Anbringen der Rahmenelemente 55 an den zumindest voreingestellten Lagern (vgl. Fig. 11) gegebenenfalls mittels weiterer Hilfsmittel wie beispielsweise Wasserwaagen und Abstandslehren etc. eine abschließende Ausrichtung der Rahmenelemente 55 erfolgen kann.

Ein solches Montagekonzept für die Rahmenelemente 55 hat sich als einfach, zuverlässig und effizient erwiesen. Alternativ ist es auch möglich, zunächst die Rahmenelemente 55 mit den Lagern zu verbinden und die Ausrichtung unter Verwendung geeigneter Hilfsmittel bei mit den Lagern verbundenen Rahmenelementen 55 vorzunehmen.

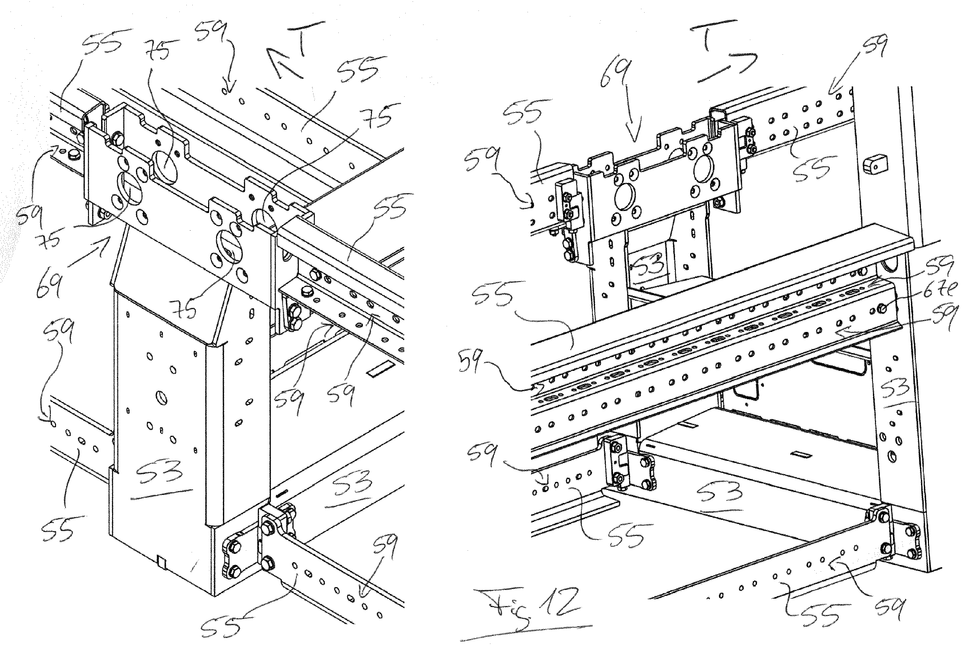

Unabhängig von dem konkreten Montagekonzept, das selbst nicht Gegenstand der Erfindung ist, sind es die erfindungsgemäß vorgesehenen Lager zwischen den Tragelementen 53 des Traggestells 51 und den Rahmenelementen 55, die es anders als im Stand der Technik gemäß Fig. 2 ermöglichen, innerhalb des Traggestells 51 und somit der Einbringstation 113, die hier als Doppel-Roboterzelle ausgebildet ist, mit den Rahmenelementen 55 einen perfekt insbesondere im Sinne einer extrem hohen Genauigkeit ausgerichteten Innen-Rahmen zu schaffen. Diesem Innen-Rahmen verleiht das Traggestell 51 die notwendige Stabilität, und der Innen-Rahmen trägt auch selbst zur Gesamtstabilität des Traggestells 51 bei. Die Rahmenelemente 55 können entsprechend den Komponenten der vor und hinter der Einbringstation 113 befindlichen Teile der Verpackungsmaschine gestaltet und insbesondere mit Anbringungsmerkmalen wie Lochreihen 59 (vgl. Fig. 12) versehen werden. Hierdurch können die Teile der Verpackungsmaschine mit hoher Positionsgenauigkeit eingangsseitig und ausgangsseitig an die Einbringstation 113 angebunden und Baugruppen der Verpackungsmaschine, insbesondere die durch die Roboterzelle hindurchführenden Führungseinrichtungen für die Transportketten der Verpackungsmaschine, an den Rahmenelementen 55 - gewissermaßen "wie gewohnt" - montiert werden. Die für derartige Transportketten erforderlichen Führungen sind grundsätzlich bekannt, so dass hierauf nicht näher eingegangen zu werden braucht.

Im Hinblick auf die Anbringung von Baugruppen der Verpackungsmaschine verhält sich somit die erfindungsgemäße Einbringstation 113 wie ein Teil der Verpackungsmaschine, stellt also keinen Bruch innerhalb der Verpackungsmaschine dar.

Wie Fig. 3 zeigt, sind im unteren Bereich der Einbringstation 113 die Lager 57 auf beiden Seiten von vertikalen Tragelementen 53 angebracht. In einer höheren Vertikalposition, nämlich etwa in Höhe der im Betrieb durch die Einbringstation 113 hindurchgeführten Verpackungsbestandteile, sind die vertikalen Tragelemente 53 mit Verbreiterungen 69 in Transportrichtung T versehen, und an beiden Seiten dieser Verbreiterungen 69 sind ebenfalls Lager 57 sowie die erwähnten, in diesem Ausführungsbeispiel ebenfalls als Lager ausgebildeten weiteren Befestigungselemente 67 angebracht.

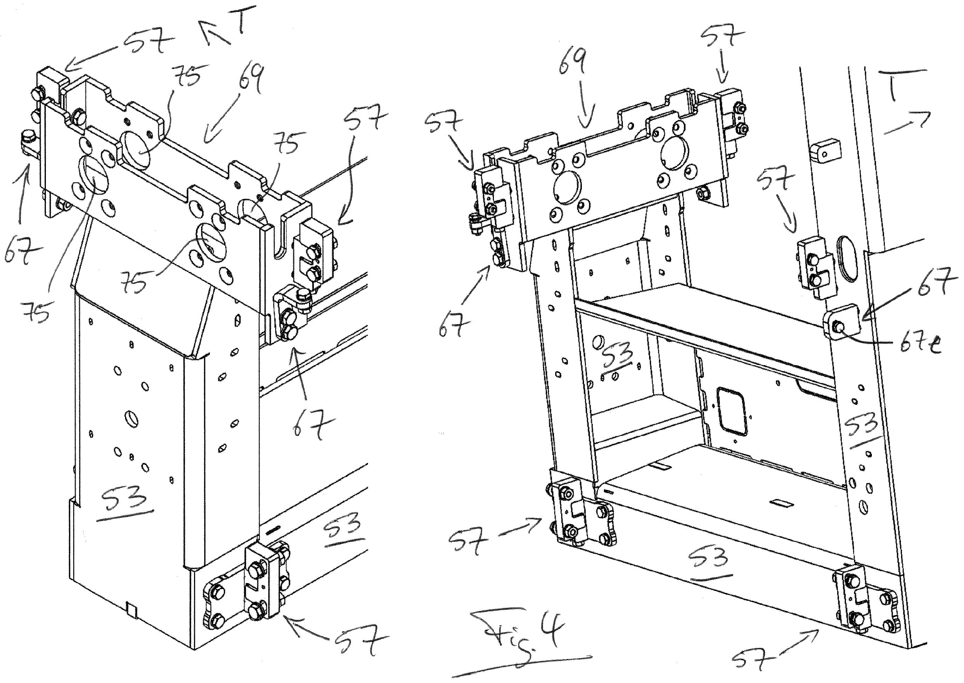

Fig. 4 zeigt links vergrößert das mittlere vertikale Tragelement 53 auf der in Transportrichtung T linken Seite des Traggestells 51, wobei rechts in Fig. 4 dieses mittlere Tragelement 53 von der in Transportrichtung T rechten Seite aus gezeigt ist und dort auch ein Lager 57 und ein weiteres Befestigungselement 67 in der erhöhten Vertikalposition sowie im unteren Bereich ein Lager 57 gezeigt sind, die an einem nicht mit einer Verbreiterung versehenen vertikalen Tragelement 53 angebracht sind.

Entsprechende Ansichten, nur mit bereits an den Lagern angebrachten Rahmenelementen 55, zeigt Fig. 12.

Auch an den nach stromaufwärts und stromabwärts weisenden Seiten der vertikalen Tragelemente 53, also eingangsseitig und ausgangsseitig am Traggestell 51, sind Lager 57, 67 angebracht, die zur Anbindung der nicht dargestellten Abschnitte der Verpackungsmaschine dienen, in welche die erfindungsgemäße Einbringstation 113 integriert ist.

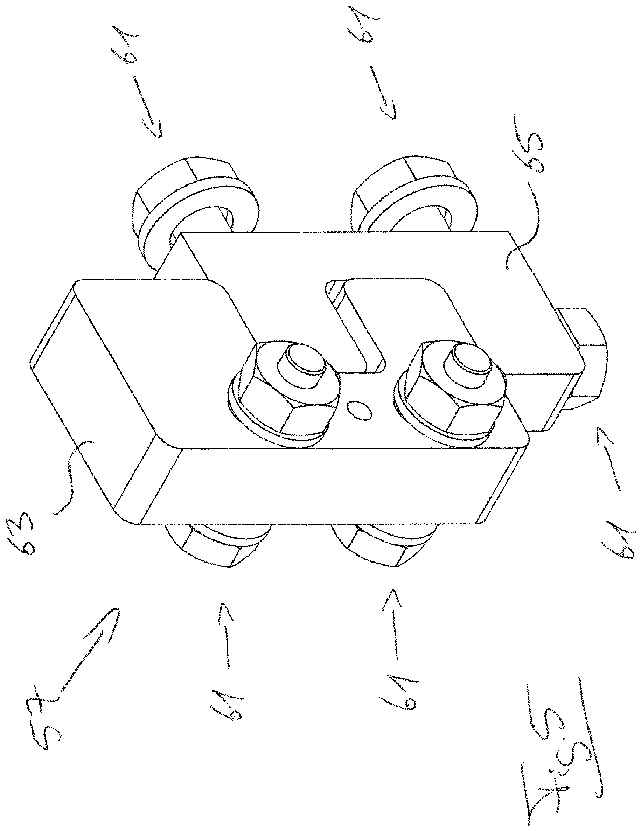

Den Aufbau der Lager 57 und weiteren Befestigungselemente 67 zeigen die Fig. 5 bis 10.

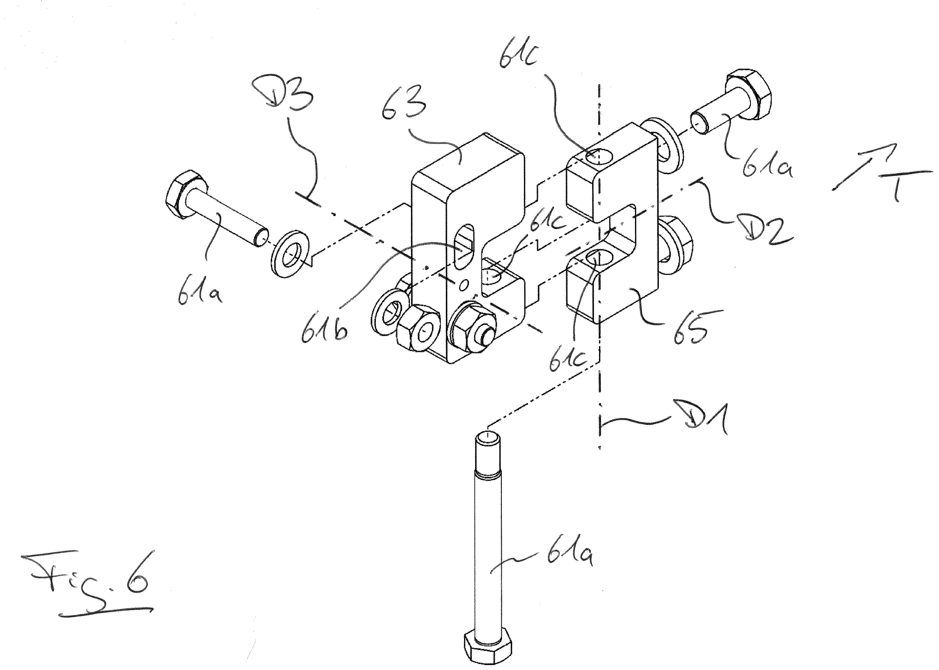

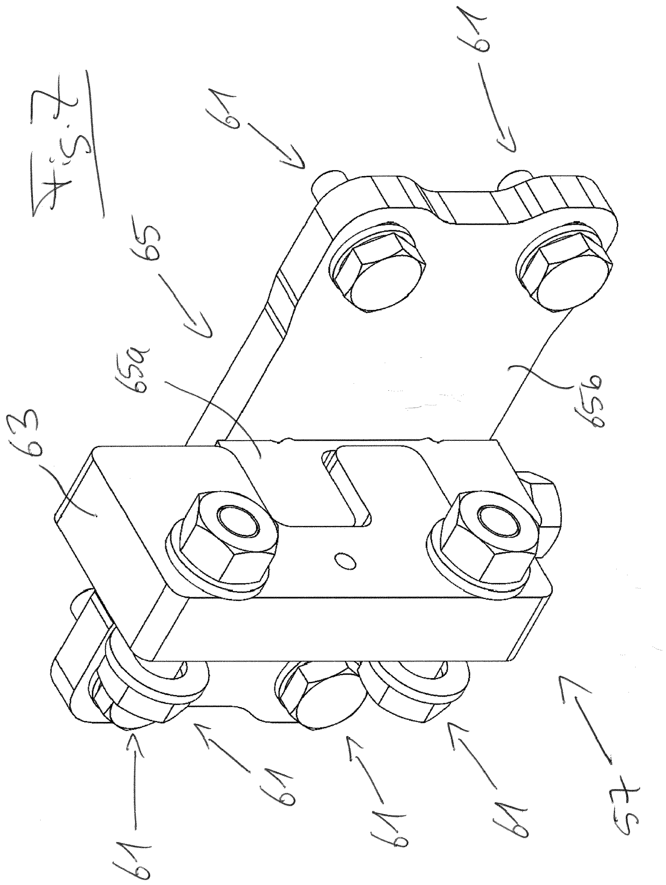

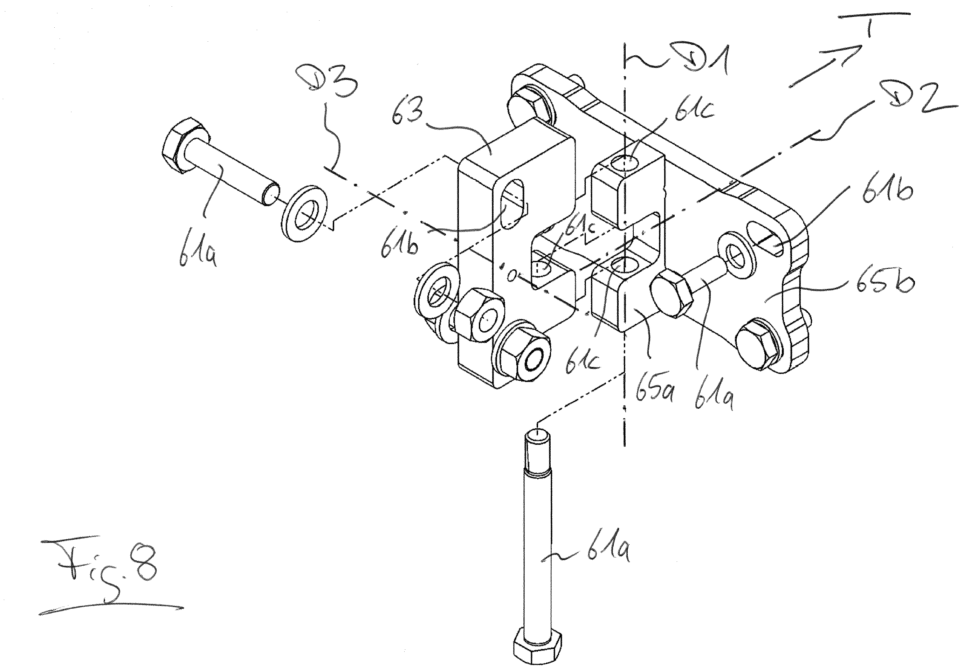

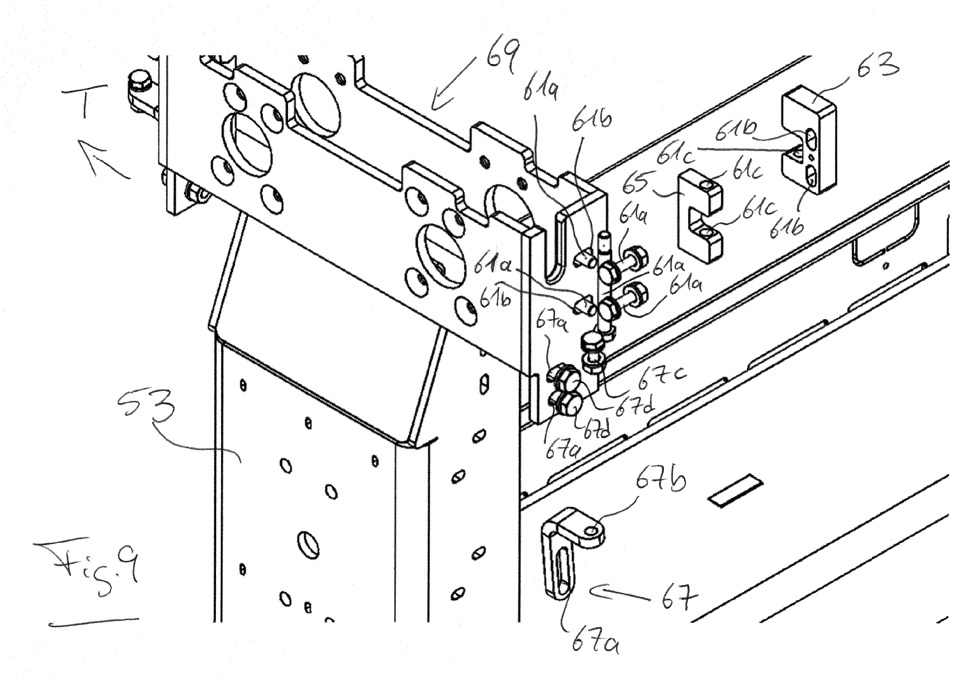

Das Lager 57 gemäß Fig. 5 und 6 einerseits und das Lager 57 gemäß Fig. 7 und 8 andererseits unterscheiden sich voneinander lediglich dadurch, dass das eine Lagerteil 65 im einen Fall (Fig. 5 und 6) einteilig ausgeführt und lediglich von einem C-förmigen Teil gebildet ist, das direkt mit einem Tragelement 53 verschraubt wird (vgl. Fig. 9), und zwar mit einer senkrecht zur Transportrichtung T verlaufenden Stirnplatte einer jeweiligen Verbreiterung 69 eines vertikalen Tragelements 53, und im anderen Fall (Fig. 7 und 8) dieses Lagerteil 65 mehrteilig ausgebildet ist und ein C-förmiges Teil 65a und eine Platte 65b aufweist, die über einen Vorsprung 79 am Teil 65a und eine dazu passende Aussparung 77 an der Platte 65b miteinander verbunden sind, wobei diese Lager 57 jeweils im unteren Bereich eines jeweiligen vertikalen Tragelements 53 angebracht sind.

Bei dem Lager 57 gemäß Fig. 5 und 6 sind die beiden Lagerteile 63, 65 jeweils C-förmig ausgebildet und greifen ineinander. Durch Schraubverbindungen 61 sind die beiden Teile 63, 65 jeweils miteinander sowie mit einem Tragelement 53 des Traggestells 51 bzw. einem Rahmenelement 55 verbunden (vgl. Fig. 9 und 12). Wie insbesondere Fig. 6 zeigt, sind die beiden Teile 63, 65 um eine vertikale Achse D1 gegeneinander verdrehbar, die durch den Schaft 61a einer Schraube definiert ist, die passgenau durch zylindrische Löcher 61c in den Lagerteilen 63, 65 gesteckt und mit dem Lagerteil 63 verschraubt ist. Durch diese Schraubverbindung 61 ist lediglich dieser eine Freiheitsgrad (Rotation um die Achse D1) realisiert.

Zwei weitere Freiheitsgrade sind durch das Lagerteil 65 realisiert. Dieses ist über zwei Schraubverbindungen 61 mit dem Tragelement 53 (Fig. 9) verbunden. Hierzu sind in der erwähnten Stirnplatte der Verbreiterung 69 Langlöcher 61b ausgebildet, die zum einen eine horizontale Translation senkrecht zur Transportrichtung T erlauben. Zum anderen, da die Schäfte 61a der Schrauben einen Durchmesser aufweisen, der kleiner ist als die Breite des jeweiligen Langlochs 61b, erlaubt diese Anbindung des Lagerteils 65 an die Stirnplatte des Tragelements 53 im gelösten Zustand der Schraubverbindungen 61 eine begrenzte Rotation um eine parallel zur Transportrichtung T verlaufende Achse D2. Das Lagerteil 65 kann folglich relativ zum Tragelement 53 verschoben und verdreht werden.

Das andere Lagerteil 63 erlaubt ebenfalls eine Rotation und eine Translation sowie eine weitere Translation durch Zusammenwirken mit dem Rahmenelement 55, wie nachstehend näher erläutert wird.

Dieses Lagerteil 63 wird nicht mit einem der Tragelemente 53 des Traggestells 51 verschraubt, sondern mit einem jeweiligen Rahmenelement (vgl. insbesondere rechts in Fig. 12). Hierzu ist das Lagerelement 63 mit zwei vertikalen Langlöchern 61b versehen, durch welche jeweils ein Schaft 61a einer Schraube hindurchgeführt ist, dessen Durchmesser wiederum kleiner ist als die Breite des Langlochs 61b. Hierdurch kann das Rahmenelement 55 in vertikaler Richtung relativ zum Lagerteil 63 und somit zum Lagerteil 65 und folglich zum Traggestell 51 verschoben werden. Außerdem ermöglichen die beiden Schraubverbindungen 61 im gelösten Zustand wiederum eine begrenzte Rotation um eine Achse D3, die in horizontaler Richtung senkrecht zur Transportrichtung T verläuft. Die Schäfte 61a der beiden Schrauben erstrecken sich durch im jeweiligen Rahmenelement 55 ausgebildete Langlöcher (nicht separat dargestellt), die parallel zur Längserstreckung des Rahmenelements 55 verlaufen und es somit erlauben, das Rahmenelement 55 bei gelösten Schraubverbindungen 61 parallel oder näherungsweise parallel zur Transportrichtung T relativ zum Lagerteil 63 und somit zum Lagerteil 65 und folglich zum Traggestell 51 zu verschieben.

Auf diese Weise realisiert dieses erfindungsgemäße Lager 57 sechs Freiheitsgrade für das Herstellen einer jeweils gewünschten Position und Orientierung, also einer gewünschten Ausrichtung, des jeweiligen Rahmenelementes 55 im Raum.

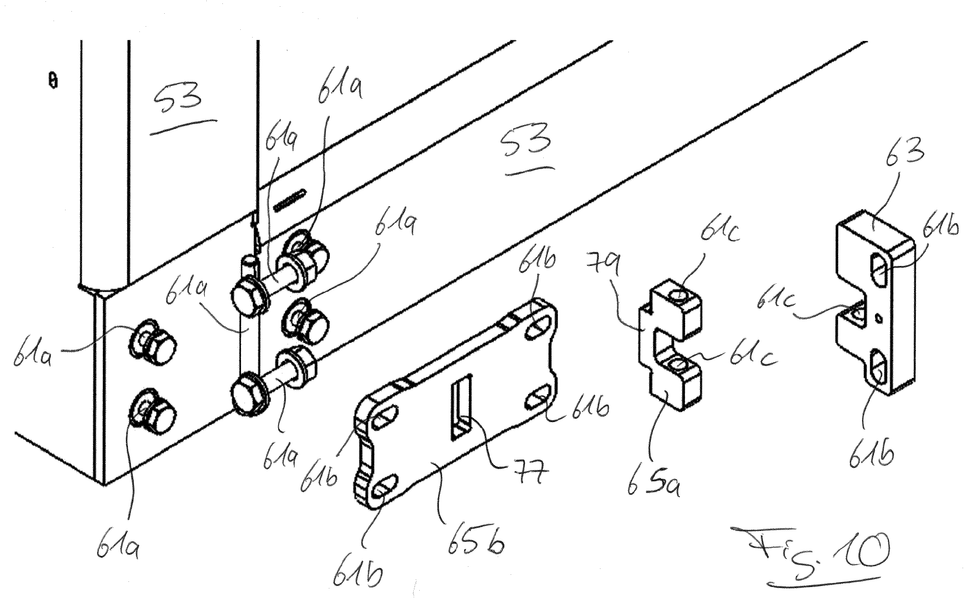

Das andere Lager 57 (Fig. 7 und 8) realisiert die sechs Freiheitsgrade auf analoge Weise. Für die horizontale Verschiebung senkrecht zur Transportrichtung T sorgen hier aber nicht im jeweiligen Traggestell 53 vorgesehene Langlöcher, sondern Langlöcher 61b in der Platte 65b (vgl. auch Fig. 10).

Hinzuweisen ist darauf, dass in den Darstellungen der Fig. 9 und 10 mit Ausnahme der Lagerteile 63, 65 (Fig. 9) bzw. der Bestandteile 63, 65a, 65b (Fig. 10), die zur besseren Veranschaulichung herausgestellt dargestellt sind, alle weiteren Bauteile jeweils an einer Position dargestellt sind, die sie im zusammengesetzten Zustand relativ zueinander einnehmen.

Ebenfalls an einer jeweiligen Stirnplatte der Verbreiterung 69 ist das bereits erwähnte jeweilige weitere Befestigungselement 67 angebracht, das in Fig. 9 wiederum zur besseren Veranschaulichung in einem herausgelösten Zustand dargestellt ist. Bei diesem Befestigungselement 67 handelt es sich um eine Befestigungslasche mit zwei rechtwinklig zueinander verlaufenden Abschnitten. Der eine Abschnitt ist mit einem Langloch 67a versehen, durch welches im montierten Zustand die Schäfte zweier Schrauben 67d hindurchgeführt sind, für die zudem zwei Langlöcher 67a in der Stirnplatte der Verbreiterung 69 ausgebildet sind, wobei diese Langlöcher 67a sich horizontal quer zur Transportrichtung T erstrecken. Das Befestigungselement 67 kann folglich sowohl in horizontaler Richtung als auch in vertikaler Richtung jeweils senkrecht zur Transportrichtung T verschoben werden, wenn die Schraubverbindungen gelöst sind. Zudem, da wiederum die Schäfte der Schrauben 67d einen Durchmesser aufweisen, der kleiner ist als die Breite der Langlöcher 67a, kann das Befestigungselement 67 begrenzt um eine parallel zur Transportrichtung T verlaufende Achse gedreht werden. Die Befestigung des Rahmenelementes 55 an dem weiteren Befestigungselement 67 erfolgt über den anderen Abschnitt des Befestigungselementes 67, der mit einem zylindrischen Loch 67b versehen ist, durch welches der Schaft einer Schraube 67c hindurchgeführt ist.

Wie insbesondere Fig. 12 zeigt, sind die Rahmenelemente 55 als Winkelprofile ausgebildet, wobei mit dem weiteren Befestigungselement 67 ein Abschnitt eines jeweiligen Rahmenelementes 55 verschraubt wird, der unter einem von Null verschiedenen Winkel zu jenem Abschnitt des Rahmenelementes 55 verläuft, der mit dem Lagerteil 63 des anderen Lagers 57 verschraubt ist.

An den Verbreiterungen 69 der vertikalen Tragelemente 53 besitzt also jede Verbindungsstelle zwischen Rahmenelement 55 und Tragelement 53 zwei Lager, womit eine äußerst stabile und gleichwohl alle erforderlichen Einstellmöglichkeiten für eine Ausrichtung mit allen Freiheitsgraden bietende Verbindung zwischen jeweiligem Rahmenelement 55 und Tragelement 53 des Traggestells 51 ermöglicht ist.

Für den Schaft der Schraube 67c ist der betreffende Abschnitt des Rahmenelementes 55 mit einem Langloch (nicht separat dargestellt) versehen, das in Richtung der Längserstreckung des Rahmenelementes 55 verläuft, um auch diesbezüglich einen Freiheitsgrad für die Ausrichtung des Rahmenelementes 55 bereitzustellen.

Wie rechts in Fig. 4 gezeigt ist, ist auch auf der in Transportrichtung T rechten Seite zusätzlich zu dem bereits beschriebenen Lager 57 für ein jeweiliges Rahmenelement 55 (vgl. auch rechts in Fig. 12) ein weiteres Befestigungselement 67 vorgesehen, das als einfache, nicht abgewinkelte Lasche ausgebildet ist.

Mit einem jeweiligen vertikalen Tragelement 53 ist dieses Befestigungselement 67 über zwei Schraubverbindungen verschraubt, die vertikal übereinander liegen und für die jeweils im Tragelement 53 ein horizontal quer zur Transportrichtung T verlaufendes Langloch (nicht separat dargestellt) vorgesehen ist. Damit ist eine entsprechende Verschiebung des Befestigungselementes 67 sowie, da wiederum die Schäfte der Schrauben einen Durchmesser aufweisen, der kleiner ist als die Breite des jeweiligen Langlochs, eine begrenzte Rotation um eine parallel zur Transportrichtung T verlaufende Achse möglich.

Zudem ist für die zur Befestigung am Rahmenelement 55 (vgl. auch rechts in Fig. 12) vorgesehene Schraube 67e in dem Befestigungselement 67 ein vertikal verlaufendes Langloch vorgesehen, so dass das Rahmenelement 55 in vertikaler Richtung relativ zum Befestigungselement 67 und somit zum Tragelement 53 verschoben werden kann. Ferner ist wiederum für die Schraube 67e im jeweiligen Rahmenelement 55 ein Langloch ausgebildet, das in Richtung der Längserstreckung des Rahmenelementes 55 verläuft, womit eine entsprechende Verschiebemöglichkeit des Rahmenelementes 55 relativ zum Befestigungselement 67 und somit zum Tragelement 53 gegeben ist.

Wie in Fig. 11 dargestellt ist, sind die jeweils als Pick-and-Place-Roboter ausgebildeten Handhabungseinrichtungen, für welche die von dem Traggestell 51 gebildete Roboterzelle vorgesehen ist und die jeweils durch ein eingekreistes "R" bezeichnet sind, im oberen Bereich des Traggestells 51 angebracht. Wie bereits erwähnt, handelt es sich bei dem Traggestell 51 um eine Roboter-Doppelzelle. Die beiden Roboter R sind in Transportrichtung T aufeinanderfolgend angeordnet. Die Anordnung derartiger Roboter R und deren Ausgestaltung sind grundsätzlich bekannt, so dass hierauf nicht näher eingegangen wird.

Die Roboter R dienen dazu, mittels einer Produktzufuhr P, die in Fig. 11 lediglich durch einen Pfeil schematisch angedeutet ist, zugeführte Produkte aufzunehmen und in Packungsbestandteile einzulegen oder auf Packungsbestandteile aufzulegen, die mittels der Transporteinrichtung 27 in die Einbringstation 113 hineintransportiert werden. Insbesondere handelt es sich bei den Packungsbestandteilen um zuvor im vorgelagerten Teil der Verpackungsmaschine mittels einer Tiefziehstation in einer Unterfolie hergestellte Vertiefungen, wobei die Unterfolie mittels quer zur Transportrichtung T beabstandeter Transportketten 27 entlang der Verpackungsmaschine in Transportrichtung T transportiert und somit auch durch die Einbringstation 113 hindurchbewegt wird.

Innerhalb der Einbringstation 113 befinden sich diese von den Vertiefungen gebildeten Packungsbestandteile in einem Einbringbereich, wobei ein von der Produktzufuhr P gebildeter Abnahmebereich seitlich neben dem Traggestell 51 liegt. Insbesondere wird der Abnahmebereich von der Auflagefläche eines auch als Eintragband bezeichneten, im Bereich der Einbringstation 113 parallel zur Transportrichtung T umlaufenden Endlosbandes gebildet, das in diesem Beispiel die Produktzufuhr P darstellt.

Damit die Arbeitswege für die Roboter R bzw. deren Greifer möglichst klein sind, ist es von Vorteil, wenn der erwähnte Abnahmebereich so nahe wie möglich am Einbringbereich zwischen den beiden Transportketten 27 liegt. Die Transportketten 27 sind in hier nicht dargestellten Führungseinrichtungen geführt, die jeweils innen an den Rahmenelementen 55 befestigt sind. Die Arbeitswege für die Roboter R sind also umso kürzer, je näher der Abnahmebereich an den Außenseiten der hier in Transportrichtung T linken Rahmenelemente 55 liegt. Zu diesem Zweck sind in den erwähnten Verbreiterungen 69, nämlich an zwei parallelen Seitenplatten, Öffnungen 75 (vgl. Fig. 4 und 12) ausgebildet, durch welche hier nicht dargestellte und in Fig. 11 gestrichelt gezeichnete Tragarme 71 gesteckt sind, die im eingesteckten Zustand zudem an den Verbreiterungen 69 befestigt sind.

Wie Fig. 11 zeigt, kragen diese sich senkrecht zur Transportrichtung T horizontal erstreckenden Tragarme 71 seitlich aus, so dass die Produktzufuhr P an diesen Tragarmen 71 abgestützt werden kann. Wie an anderer Stelle bereits erwähnt, kann hierzu die Produktzufuhr P, beispielsweise ein Eintragband, entsprechende Träger aufweisen, mittels welcher das Eintragband seitlich auf die Tragarme 71 aufgesteckt werden kann.

Damit ist die Produktzufuhr P - anders als beim Stand der Technik gemäß Fig. 2 - nicht an sich in Transportrichtung T erstreckenden Seitenteilen des Traggestells 51 befestigt, sondern an vertikalen Tragarmen 53 des massiven Traggestells 51, d.h. die Rahmenelemente 55 selbst dienen nicht unmittelbar zur Abstützung der Produktzufuhr P.

Damit werden zwei Funktionen der Einbringstation 113 auf unterschiedliche Bestandteile aufgeteilt: Das massive Traggestell 51 ist die Basis für die Roboter R sowie für die auskragenden Tragarme 71 und damit der Produktzufuhr P. Für diese Funktion sind eine hohe Masse und eine hohe Stabilität erforderlich, die von dem Traggestell 51 ohne Weiteres bereitgestellt wird, wobei eine hohe Positionsgenauigkeit aber nicht notwendig ist, da eventuelle Ungenauigkeiten vergleichsweise klein sind und somit problemlos durch die Arbeitsbewegungen der Roboter R kompensiert werden können. Die dank der Erfindung mit hoher Genauigkeit ausgerichteten Rahmenelemente 55 der Einbringstation 113 tragen bei fixierten Lagern 57, 67 ebenfalls zur Stabilität der Gesamtkonstruktion bei und stellen zusätzlich - als weitere Funktion der Einbringstation 113 - dank der durch die Erfindung ermöglichten exakten Ausrichtung gewissermaßen eine Weiterführung des Gestells bzw. des Rahmens der Verpackungsmaschine durch die Einbringstation 113 hindurch dar. Hierdurch ist sichergestellt, dass ohne zusätzlichen Bearbeitungsaufwand, wie er im Stand der Technik gemäß Fig. 2 notwendig ist, eine einfache, unkomplizierte und genaue Anbringung von Baugruppen der Verpackungsmaschine, insbesondere der beispielsweise Transportketten 27 umfassenden Transporteinrichtung, erfolgen kann.

### Bezugszeichenliste

- 10: Produkt
- 11: Formstation
- 11a: Oberwerkzeug der Formstation
- 11b: Unterwerkzeug der Formstation
- 13: Einbringstation
- 13a: Förderband
- 13b: Förderband
- 14: Zufuhrstation
- 15: Siegelstation
- 15a: Oberteil der Siegelstation
- 15b: Unterteil der Siegelstation
- 16: Etikettierstation
- 17: Trennstation (Querrichtung)
- 19: Trennstation (Längsrichtung)
- 21: Packung
- 23: Unterfolie
- 23a: Vorratsrolle
- 25: Oberfolie
- 25a: Vorratsrolle
- 27: Transporteinrichtung (Transportkette für Unterfolie)
- 29: Vertiefung
- 31: oberer Bereich
- 33: unterer Bereich
- 35: Vakuumpumpe
- 37: Schutzgasquelle
- 41: Steuereinrichtung
- 43: Siegelnaht
- 45: Bedieneinheit
- 47: Maschinengestell
- 50: Roboter
- 51: Traggestell
- 53: Tragelement
- 55: Rahmenelement
- 57: Lager
- 59: Anbringungsmerkmal, Lochreihe
- 61: Schraubverbindung
- 61a: Schraubenschaft
- 61b: Langloch
- 61c: Loch
- 63: Lagerteil am Rahmenelement
- 65: Lagerteil am Traggestell
- 65a: C-förmiges Teil
- 65b: Platte
- 67: weiteres Befestigungselement, Lager
- 67a: Langloch
- 67b: Loch
- 67c: Schraube
- 67d: Schraube
- 67e: Schraube
- 69: Verbreiterung
- 71: Anbindung, Tragarm
- 73: Träger, Flachstahl
- 75: Öffnung
- 77: Aussparung
- 79: Vorsprung
- 113: Einbringstation

- V: Verpackungsmaschine
- T: Transportrichtung
- R: Handhabungseinrichtung, Roboter
- E: Eintrittsseite
- A: Austrittsseite
- P: Produktzufuhr
- F: Frässtelle
- D1: erste Drehachse
- D2: zweite Drehachse
- D3: dritte Drehachse

## Patentansprüche

1. Verpackungsmaschine (V) für Lebensmittelprodukte (10), insbesondere Thermoformer oder Traysealer,
mit mehreren längs einer Transportrichtung (T) hintereinander angeordneten Arbeitsstationen zum Herstellen von Packungen (21) jeweils aus zumindest einem unteren Packungsbestandteil (23), insbesondere einer Unterfolie oder einem vorgefertigten Packungsbestandteil, und zumindest einem oberen Packungsbestandteil (25), insbesondere einer Oberfolie, die wenigstens einen Produktbereich einer jeweiligen Packung (21) einschließen, und
mit einer Transporteinrichtung (27), mit der während des Betriebs die Packungsbestandteile (23, 25) in Transportrichtung (T) durch die Arbeitsstationen hindurch transportiert werden,
wobei eine Arbeitsstation eine Einbringstation (113) zum Einlegen oder Auflegen von Produkten (10) in bzw. auf einen oder die Packungsbestandteile (23, 25) ist,
wobei die Einbringstation (113) umfasst:
- ein sich im aufgestellten Betriebszustand am Boden abstützendes Traggestell (51), das eine Mehrzahl von miteinander verbundenen Tragelementen (53) umfasst,
- zumindest eine von dem Traggestell (51) getragene Handhabungseinrichtung (R), insbesondere einen Roboter, zum Einlegen oder Auflegen der Produkte (10) in bzw. auf einen oder die Packungsbestandteile (23, 25), und
- eine Mehrzahl von Rahmenelementen (55), die jeweils an zumindest einer Verbindungsstelle mit dem Traggestell (51) verbunden sind und an denen zumindest eine Baugruppe der Verpackungsmaschine (V) angebracht ist, so dass die Baugruppe nicht unmittelbar, sondern mittelbar über ein oder mehrere Rahmenelemente (55) an dem Traggestell (51) angebracht ist,
wobei jede Verbindungsstelle von einem mechanischen Lager (57) gebildet ist, das in einem gelösten Zustand eine Ausrichtbewegung relativ zu dem Traggestell (51) erlaubt, und
wobei die Lager (57) jeweils ausgehend von dem gelösten Zustand in einen die Ausrichtbewegung unterbindenden fixierten Zustand überführbar sind, um die Rahmenelemente (55) in einer Montage-Konfiguration zu fixieren, in der die Rahmenelemente (55) in einer, insbesondere durch die jeweils anzubringende Baugruppe, vorgegebenen Weise relativ zueinander ausgerichtet sind.

2. Verpackungsmaschine nach Anspruch 1,
wobei die Rahmenelemente (55) einen Transportdurchgang für die sich während des Betriebs durch die Einbringstation (113) hindurchbewegende Transporteinrichtung (27) definieren,
und/oder wobei die Rahmenelemente jeweils ein Seitenteil der Verpackungsmaschine bilden.

3. Verpackungsmaschine nach einem der vorhergehenden Ansprüche, wobei die Rahmenelemente (55) jeweils eine langgestreckte Form aufweisen,
und/oder wobei die Rahmenelemente (55) sich jeweils in Transportrichtung (T) erstrecken.

4. Verpackungsmaschine nach einem der vorhergehenden Ansprüche, wobei zumindest ein innerhalb des Traggestells (51) befindliches Rahmenelement (55) mit zumindest einem in Transportrichtung (T) vor oder hinter dem Traggestell (51) befindlichen Rahmenelement (55) der Verpackungsmaschine (V) fluchtet,
und/oder wobei die Rahmenelemente (55) sich jeweils in einem Bereich zwischen zwei vertikal verlaufenden, in Transportrichtung (T) voneinander beabstandeten Tragelementen (53) des Traggestells (51) erstrecken.

5. Verpackungsmaschine nach einem der vorhergehenden Ansprüche, wobei zumindest ein Paar von Rahmenelementen (55) vorgesehen ist, die in der gleichen Vertikalposition parallel zueinander in Transportrichtung (T) und quer zur Transportrichtung (T) mit Abstand voneinander verlaufen insbesondere wobei zumindest zwei derartige Paare von Rahmenelementen (55) vorgesehen sind, die in unterschiedlichen Vertikalpositionen gelegen sind.

6. Verpackungsmaschine nach einem der vorhergehenden Ansprüche, wobei die Rahmenelemente (55) jeweils mit zumindest einem mechanischen Anbringungsmerkmal (59) versehen sind, insbesondere mit zumindest einer Lochreihe.

7. Verpackungsmaschine nach einem der vorhergehenden Ansprüche, wobei die Baugruppe zwischen einer Eingangsseite (E) des Traggestells (51), an der die Transporteinrichtung (27) in das Traggestell (51) einritt, und einer Ausgangsseite (A) des Traggestells (51) angeordnet ist, an der die Transporteinrichtung (27) aus dem Traggestell (51) austritt, und/oder wobei die Baugruppe in Transportrichtung (T) vor oder hinter dem Traggestell (51) angeordnet ist,
und/oder wobei die Baugruppe eine Führungseinrichtung für die Transporteinrichtung (27) der Verpackungsmaschine (V) ist, insbesondere für zwei quer zur Transportrichtung (T) voneinander beabstandete Transportketten jeweils zum seitlichen Halten eines bahnförmigen Packungsbestandteils (23), insbesondere einer Unterfolie.

8. Verpackungsmaschine nach einem der vorhergehenden Ansprüche, wobei zum Fixieren und Lösen eines jeweiligen Lagers (57) eine oder mehrere Schraubverbindungen (61) vorgesehen sind,
und/oder wobei ein jeweiliges Lager (57) eine Kombination aus zumindest einem Drehlager und wenigstens einem Linearlager ist,
und/oder wobei ein jeweiliges Lager (57) eine Ausrichtbewegung mit sechs Freiheitsgraden erlaubt

9. Verpackungsmaschine nach einem der vorhergehenden Ansprüche, wobei ein jeweiliges Lager (57) zwei, bevorzugt zumindest bereichsweise C-förmige, ineinandergreifende, Lagerteile (63, 65) umfasst, von denen das eine mit einem jeweiligen Rahmenelement (55) und das andere mit dem Traggestell (51) verbunden ist, insbesondere wobei zwischen den beiden Lagerteilen (63, 65) eine erste Rotation um eine, insbesondere vertikal verlaufende, erste Drehachse (D1) möglich ist, insbesondere wobei die Rotation um die erste Drehachse (D1) durch eine lösbare und fixierbare Schraubverbindung (61) zwischen den beiden Lagerteilen (63, 65) ermöglicht ist.

10. Verpackungsmaschine nach Anspruch 9,
wobei zwischen dem einen Lagerteil (63) und einem jeweiligen Rahmenelement (55) und zwischen dem anderen Lagerteil (65) und dem Traggestell (51) jeweils eine Rotation um eine zweite (D2) bzw. um eine dritte Drehachse (D3) sowie zumindest eine Translation senkrecht zur zweiten (D2) bzw. dritten Drehachse (D3) möglich ist, insbesondere wobei die zweite Drehachse (D2) und die dritte Drehachse (D1) senkrecht zueinander und jeweils horizontal verlaufen,
insbesondere wobei jeweils die Rotation und die zumindest eine Translation durch zwei Stift-/Langloch-Anordnungen, insbesondere zwei lösbare und fixierbare Schraubverbindungen (61), ermöglicht sind, die insbesondere zwei parallel zur jeweiligen Drehachse (D2, D3) und jeweils durch zumindest ein sich senkrecht zur jeweiligen Drehachse (D2, D3) erstreckendes Langloch (61b) hindurchverlaufende Verbindungsstifte (61a), bevorzugt Schrauben bzw. Schraubenschäfte, umfassen.

11. Verpackungsmaschine nach einem der vorhergehenden Ansprüche, wobei zumindest für eine Verbindungsstelle zusätzlich zumindest ein, vorzugsweise als Lasche ausgebildetes, Befestigungselement (67) vorgesehen ist, über welches das jeweilige Rahmenelement (55) mit dem Traggestell (51) verbunden ist,
insbesondere wobei das Befestigungselement (67) als ein mechanisches Lager ausgebildet ist, das in einem gelösten Zustand eine Ausrichtbewegung relativ zu dem Traggestell (51) erlaubt und jeweils ausgehend von dem gelösten Zustand in einen die Ausrichtbewegung unterbindenden fixierten Zustand überführbar ist, um das jeweilige Rahmenelement (55) in der Montage-Konfiguration zu fixieren.

12. Verpackungsmaschine nach einem der vorhergehenden Ansprüche, wobei das Traggestell (51) eine Schweißkonstruktion ist.

13. Verpackungsmaschine nach einem der vorhergehenden Ansprüche, wobei die Lager (57) jeweils traggestellseitig mit einem vertikal verlaufenden Tragelement (53), insbesondere mit einer Tragsäule, verbunden sind, insbesondere wobei das vertikal verlaufende Tragelement (53) in Höhe des Lagers (57) eine Verbreiterung (69) in Transportrichtung (T) aufweist.

14. Verpackungsmaschine nach einem der vorhergehenden Ansprüche, wobei die Transporteinrichtung (27) zwei quer zur Transportrichtung (T) voneinander beabstandete Transportketten jeweils zum seitlichen Halten eines bahnförmigen Packungsbestandteils (23), insbesondere einer Unterfolie, umfasst,
und/oder wobei die Handhabungseinrichtung (R) als ein Pick-and-Place-Roboter ausgebildet ist.

15. Verpackungsmaschine nach einem der vorhergehenden Ansprüche, wobei die Einbringstation (113) eine Anbindung (71) für eine Produktzufuhr (P), insbesondere ein Eintragband, umfasst, wobei ein Arbeitsbereich der von dem Traggestell (51) getragenen Handhabungseinrichtung (R) einen Einbringbereich zum Einlegen oder Auflegen der Produkte (21) in bzw. auf einen oder die Packungsbestandteile (23, 25) und einen seitlich neben dem Einbringbereich gelegenen, von der Produktzufuhr (P) bereitgestellten Abnahmebereich für mittels der Produktzufuhr (P) zugeführte und von der Verpackungsmaschine (V) zu verpackende Produkte (21) abdeckt, und wobei die Anbindung (71) für die Produktzufuhr (P) ausschließlich am Traggestell (51) abgestützt oder ausschließlich vom Traggestell (51) gebildet ist, insbesondere wobei die Anbindung eine Mehrzahl von am Traggestell (51) befestigten, seitlich auskragenden und sich senkrecht zur Transportrichtung (T) erstreckenden Tragarmen (71) umfasst, an denen die Produktzufuhr (P) abgestützt ist, insbesondere wobei die Produktzufuhr (P) auf die Tragarme (71) aufsteckbar ist, vorzugsweise mit Trägern eines die Produktzufuhr (P) bildenden Eintragbandes.
